# EUROPÄISCHE PATENTSCHRIFT

(11) **EP 3 515 165 B1**
(45) Veröffentlichungstag und Bekanntmachung des Hinweises auf die Patenterteilung: **19.04.2023**
(21) Anmeldenummer: 17771382.3
(22) Anmeldetag: 13.09.2017
(51) Int. Cl.: A01B 33/10, B02C 18/18

(54) **WERKZEUG AN EINEM WERKZEUGTRÄGER FÜR FRÄSEN UND ZERKLEINERER**
TOOL ON A TOOL CARRIER FOR TILLING AND COMMINUTING
OUTIL SUR UN PORTE-OUTIL ET DESTINÉ AU FRAISAGE ET AU BROYAGE

(30) Priorität: 21.09.2016 IT 201600094638
(43) Veröffentlichungstag der Anmeldung: 31.07.2019
(73) Patentinhaber: Seppi M. spa-AG, 39052 Caldaro (IT)
(72) Erfinder: SEPPI, Lorenz, 39052 Caldaro (IT)
(74) Vertreter: Ausserer, Anton
(86) Internationale Anmeldenummer: PCT/EP2017/072991
(87) Internationale Veröffentlichungsnummer: WO 2018/054733

(56) Entgegenhaltungen:
- EP-A1- 1 693 110
- DE-U1- 20 021 216
- US-A- 3 608 841

## Beschreibung

Die vorliegende Erfindung bezieht sich auf einen Werkzeugträgerrotor mit einem Werkzeug aufgenommen in einem Werkzeugträger gemäß dem Oberbegriff des Anspruchs 1.

Derartige Werkzeuge unterliegen einem hohen Verschleiß und Belastungen, die dazu neigen, das das Werkzeug zu verformen und zu zerbrechen.

Im Allgemeinen sind zwei Werkzeugträgerarten für Zerkleinerer und/oder Fräsen bekannt. Eine erste Art weist eine Auflagefläche auf, an der das Werkzeug mit seiner der Schneidrichtung entgegengesetzten Fläche zum Beispiel mittels einer Schraube befestigt wird. Diese Werkzeugträgerart ist zum Beispiel aus DE 10 2013 110 289 A1 bekannt. Diese Werkzeugträgerart führt zum Problem, dass das Werkzeug mit seinem gesamten Körper in Schneidrichtung Schlägen und Schäden ausgesetzt ist.

Eine zweite Werkzeugträgerart weist eine Aufnahme auf, in der das Werkzeug eingesetzt wird, das durch eine erste in Schneidrichtung vorgesehene Fläche und eine zweite Fläche gebildet wird, an der das Werkzeug mit seiner Schneidrichtung abgewandten Fläche befestigt ist. Ein derartiger Werkzeugträger ist zum Beispiel aus EP 1 693 110 bekannt. Bei derartigen Aufnahmen wird das Werkzeug in der Aufnahme am Aufnahmegrund aufliegend eingefügt und dann mittels einer Schraube befestigt. Um das Werkzeug einsetzen zu können, besteht zwischen dem Werkzeug und der Vorderfläche und der hinteren Fläche ein Spiel. Dieses Spiel bewirkt größere Belastungen und Verschleiß des Werkzeuges.

Ein weiterer wichtiger Umstand für den Werkzeugverschleiß ist der Schneidwinkel.

Die Aufgabe der vorliegenden Erfindung liegt darin, einen Werkzeugträgerrotor mit Werkzeugträger und mit Werkzeug herzustellen, das einem verminderten Verschleiß unterliegt.

Diese Aufgabe wird durch einen Werkzeugträgerrotor gemäß Anspruch 1 gelöst. Es wird somit ein Werkzeug für Fräsen und Zerkleinerer und ähnlichem vorgeschlagen, das in einem Werkzeugträger in einem Werkzeugträgerrotor angeordnet ist, der um die Rotorachse drehbar ist. Das Werkzeug ist in einer Aufnahme des Werkzeugträgers aufgenommen, die am Werkzeugträgerrotor angeordnet ist. Die Aufnahme ist durch eine erste, in Schneidrichtung vorgesehene Fläche und eine zweite Fläche gebildet, an der das Werkzeug mit seiner der Schneidrichtung abgewandten Fläche befestigt ist. Das Werkzeug besitzt einen Körper, der eine in Drehrichtung des Rotors stirnseitige Fläche und eine der stirnseitigen Fläche gegenüberliegende hintere Fläche auf weist. Vorteilhafterweise ist die hintere Fläche von 1° bis 10° gegenüber der stirnseitigen Fläche geneigt. Das Werkzeug ist ausschließlich zwischen der Fläche in Schneidrichtung der Aufnahme und der der Schneidrichtung abgewandten Fläche der Aufnahme eingespannt und gehalten, während ein Spiel zwischen Werkzeug und Aufnahmeboden besteht.

Auf diese Art und Weise wird der Werkzeugkörper zwischen den beiden Flächen der Aufnahme eingespannt. In einem weiteren Schritt wird dieser dann mittels einer Schraube befestigt. Auf diese Weise kann das Werkzeug nicht in Schneidrichtung bewegt werden. Da keine Bewegung vorliegt, wird der Werkzeugkörper weniger verschlissen. Auch der Verschleiß der Aufnahme wird vermindert.

Vorteilhafterweise weist die Werkzeugaufnahme einen erhöhten mittleren Abschnitt auf, an dem das Werkzeug positioniert werden kann, das eine entsprechende Ausnehmung aufweist. Dies ermöglicht eine leichtere Positionierung.

Um das Werkzeug in einem ersten Schritt loszulösen, wird die durch die zweite der Drehrichtung abgewandte Fläche gehende Schraube gelockert, die das Werkzeug an der Aufnahme befestigt. Dann wird der Werkzeugkopf gegen die Arbeitsrichtung geschoben. Auf diese Art und Weise wird das Werkzeug von der Aufnahme getrennt.

Vorteilhafterweise weist das erfindungsgemäße Werkzeug eine größere Breite am Ende auf, das gegenüber dem in die Aufnahme eingebrachten Ende schneidet.

In einer bevorzugten Ausführungsform ist das Werkzeug der Art ausgebildet, dass das Schneidelement der äußerste Abschnitt des Werkzeuges gegenüber der Aufnahme ist.

Weitere Merkmalen und Details der Erfindung gehen aus den Patentansprüchen und der folgenden Beschreibung einer bevorzugten nicht begrenzenden, in den beigefügten Zeichnungen dargestellten Ausführungsform hervor. Es zeigen:
- Figur 1: eine Stirnansicht eines erfindungsgemäßen Werkzeugträgerrotors,
- Figur 2: einen Schnitt eines erfindungsgemäßen Werkzeugträgerrotors,

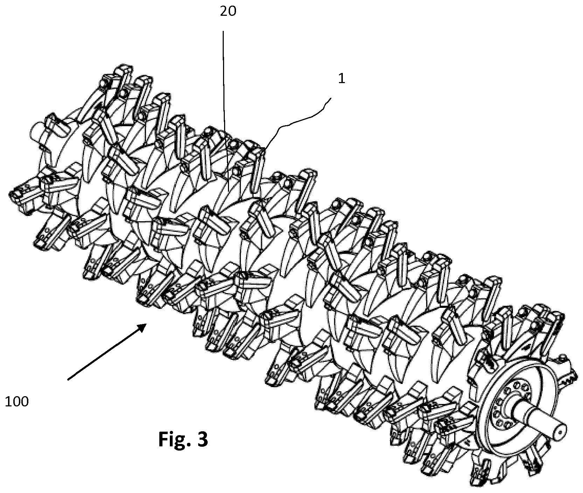

- Figur 3: ein Schaubild eines Werkzeugträgerrotors,

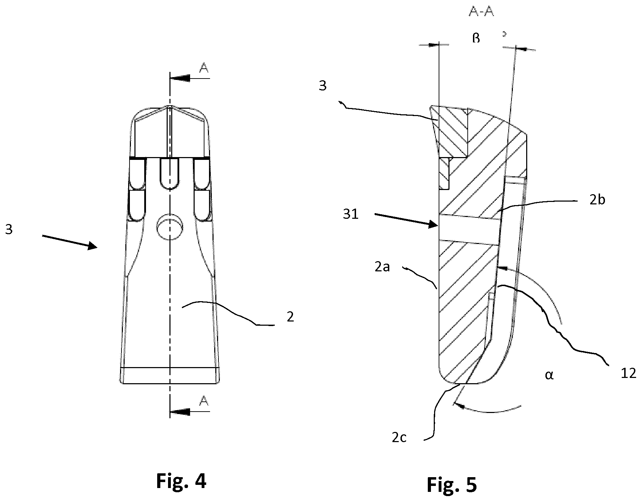

- Figur 4: eine Stirnansicht eines erfindungsgemäßen Werkzeuges,
- Figur 5: einen Schnitt eines erfindungsgemäßen Werkzeuge,
- Figur 6: einen Ansicht eines in einem Werkzeugträger eingesetzten Werkzeuges, und
- Figur 7: eine Vergrößerung A der Figur 6.

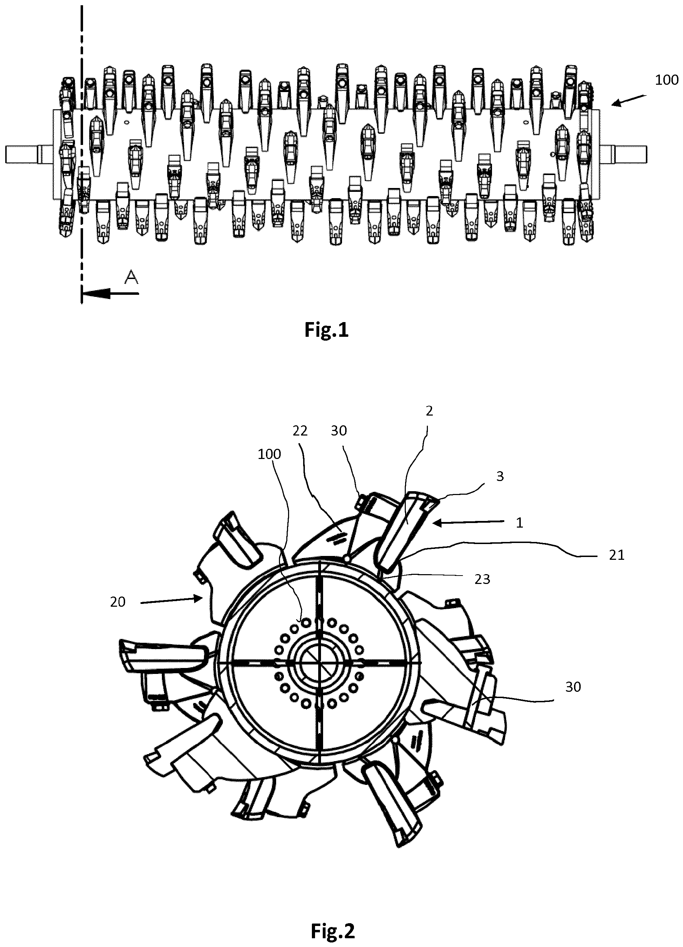

In Figur 1 wird mit der Bezugsziffer 1 ein Werkzeugträgerrotor angegeben. Am Werkzeugträgerrotor 1 sind Werkzeugträger 20 angeordnet. Jeder Werkzeugträgerrotor 20 bildet eine Aufnahme für ein Werkzeug 1 aus. Der Werkzeugträger 20 ist durch einen vorderen Abschnitt in Arbeitsrichtung 21, einen unteren Abschnitt 23 und einen hinteren, eine durchgehende Bohrung für eine Schraube 30 umfassenden Abschnitt 22 gebildet.

Das Werkzeug 1 für Fräsen und Zerkleinerer und ähnlichem, ist in einem Werkzeugträger 20 für einen Werkzeugträgerrotor 100 angeordnet, der um die Rotorachse drehbar ist. Dieses Werkzeug 1 ist in einer Aufnahme 21, 23, 23 des Werkzeugträgers 20 aufgenommen, der am Werkzeugträgerrotor 100 angeordnet ist. Die Aufnahme 20 ist durch eine erste in Schneidrichtung vorgesehene Fläche 21 und eine zweite Fläche 22 gebildet, an der das Werkzeug mit seiner der Schneidrichtung abgewandten Seite befestigt ist. Das Werkzeug 1 besitzt einen Körper 2, der eine Stirnfläche 2a in Drehrichtung des Rotors und eine hintere Fläche 2b aufweist, die der Stirnfläche 2a abgewandt ist.

Gemäß der Erfindung ist die hintere Fläche 2b von 1° bis 10° gegenüber der Stirnfläche 2a geneigt bevorzugt von 2° bis 10. Dies bedeutet, dass sich der Winkel β zwischen 182°und 190° befindet.

Das Werkzeug 1 ist ausschließlich zwischen der Fläche 21 in Schneidrichtung der Aufnahme und der zur Schneidrichtung der Aufnahme abgewandten Fläche 22 eingespannt und gehalten, wobei ein Spiel zwischen dem Werkzeug und dem Aufnahmeboden 23 belassen wird.

Im oberen Bereich ist das Werkzeug mittels einer Schraube 30 befestigt, die den Werkzeugträger 20 in der Oberfläche 22 durchgreift und in der Bohrung 31 des Werkzeuges festgezogen ist.

Vorteilhafterweise weist das Werkzeug 1 auf seiner hinteren Fläche 2b eine Ausnehmung auf. Diese Ausnehmung ist durch einen ersten oberen, im Wesentlichen zur hinteren Fläche des Werkzeuges parallelen Abschnitt und einen zweiten, unteren Abschnitt gebildet, der in Richtung der vorderen Fläche um 10° bis 90°geneigt ist, der Winkel α befindet sich daher zwischen 190°und 270°. Dies erlaubt ein leichteres Herausziehen, da eine Drehung nach rückwärts des unteren Abschnitts des Werkzeuges ermöglicht wird, sobald der Werkzeugkopf hinten mit einer Kraft gegen die Drehrichtung des Werkzeuges belastet wird.

Die mittige Ausnehmung ist überdies zu einem erhöhten Abschnitt auf der hinteren Fläche der Aufnahme 22 komplementär. Dies erlaubt eine leichtere und genauere Positionierung.

Das Werkzeug und die Aufnahmen sind in Stahl gefertigt, die Schneide 3 in bevorzugter Weise in Spezialstahl.

Die Spannschraube 31 des Werkzeuges wird bevorzugter Weise hinten in die Aufnahme des Werkzeugträgers eingebracht. Auf diese Weise wird vermieden, dass der Schraubenkopf dem Bearbeitungsverschleiß ausgesetzt wird, was dessen Auszug blockieren könnte.

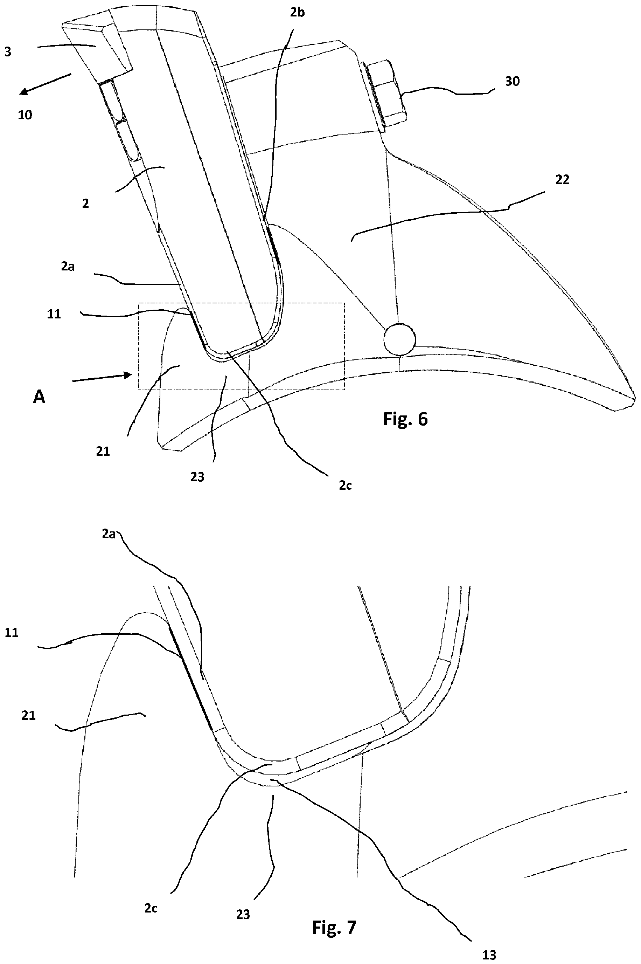

In Figur 6 ist ein Werkzeugträger 20 dargestellt, in welchem ein Werkzeug 1 eingefügt ist. Die Schneidrichtung ist mit dem Pfeil 10 angegeben. Das Werkzeug 1 ist im Werkzeugträger 20 über den Kontaktbereich 11, zwischen dem Vorderabschnitt des Werkzeugklägers 21 und der Vorderfläche des Werkzeuges 2a, und den Kontaktbereich 12, zwischen dem hinteren Abschnitt des Werkzeugträgers 22 und der hinteren Fläche des Werkzeuges 2b, eingespannt, wobei ein Spiel 13 zwischen der unteren Fläche des Werkzeuges 2c und der unteren Fläche des Werkzeugträgers 23 belassen wird.

Auf diese Art und Weise bewegt sich das Werkzeug, wie angedeutet, nicht in Arbeitsrichtung, da es auch durch die Schraube 30 eingespannt ist, wobei der Verschleiß des Werkzeugträgers 20 und der Schraube 30 vermieden wird.

Für den Ausbau des Werkzeugs wird die Schraube abgenommen und es wird ein Schlag auf den vorderen Abschnitt des Werkzeuges 1 in Arbeitsrichtung 10 ausgeführt. Es ist schließlich klar, dass am bis jetzt beschriebenen Werkzeug und Werkzeugträger Zusätze, Änderungen und Varianten vorgenommen werden können, die für den Fachmann nahe liegen, ohne den durch die beigefügten Patentansprüche gegebenen Schutzbereich zu verlassen.

### Legende der Bezugsziffer

- 1: Werkzeug
- 2: Werkzeugkörper
- 2a: vordere Fläche des Werkzeugs in Schneidrichtung
- 2b: hintere Fläche des Werkzeugs in Schneidrichtung
- 2c: untere Fläche des Werkzeugs
- 3: Schneide
- 10: Schneidrichtung
- 11: Kontaktbereich
- 12: Kontaktbereich
- 13: Spiel
- 20: Werkzeugträger
- 21: vorderer Abschnitt des Werkzeugträgers
- 22: hinterer Abschnitt des Werkzeugträgers
- 23: unterer Abschnitt des Werkzeuges
- 30: Schraube
- 31: Bohrung im Werkzeugkörper
- α: Winkel hintere Fläche Werkzeug
- β: Winkel zwischen vorderer Fläche und hintere Fläche des Werkzeugs

## Patentansprüche

1. Werkzeugträgerrotor (100) mit einem Werkzeug (1) für Fräsen und Zerkleinerer und ähnlichem, wobei das Werkzeug (1) in einem Werkzeugträger(20) für den Werkzeugträgerrotor (100) angeordnet ist, der um die Rotorachse drehbar ist, wobei das Werkzeug in einer Aufnahme (21, 22, 23) des am Werkzeugträgerrotor (100) angeordneten Werkzeugträgers (20) aufgenommen werden kann, wobei die Aufnahme durch eine erste, in Schneidrichtung vorgesehene Fläche (21) und eine zweite Fläche (22) gebildet wird, an der das Werkzeug mit seiner der Schneidrichtung abgewandten Fläche befestigt wird, wobei das Werkzeug (1) einen Körper (2) besitzt, der eine in Drehrichtung des Rotors stirnseitige Fläche (2a) und eine der stirnseitigen Fläche (2a) gegenüberliegende hintere Fläche (2b) aufweist, **dadurch gekennzeichnet, dass** das Werkzeug (1) zwischen der Fläche (21) in Schneidrichtung (10) der Aufnahme und der der Schneidrichtung (10) abgewandten Fläche (22) der Aufnahme verspannt und gehalten werden kann, während ein Spiel (13) zwischen Werkzeug und einem Aufnahmeboden der Aufnahme belassen wird.

2. Werkzeugträgerrotor nach Anspruch 1 wobei das Werkzeug (1) einen Körper (2) besitzt, der eine in Drehrichtung des Rotors stirnseitige Fläche (2a) und eine der stirnseitigen Fläche (2a) gegenüberliegende hintere Fläche (2b)aufweist und dass die hintere Fläche (2b) von 1° bis 10° gegenüber der stirnseitigen Fläche (2a) geneigt ist.

3. Werkzeugträgerrotor nach Anspruch 2, **dadurch gekennzeichnet, dass** die hintere Fläche (2b) des Werkzeugs (1) eine Ausnehmung umfasst und dass diese Aufnahme einen ersten und einen zweiten unteren Endabschnitt aufweist, der zwischen 10° - 90°gegenüber dem oberen Abschnitt in Drehrichtung geneigt ist.

4. Werkzeugträgerrotor nach Anspruch 2 oder 3, **dadurch gekennzeichnet, dass** das Werkzeug ausschließlich zwischen der Fläche (21) in Schneidrichtung der Aufnahme und der der Schneidrichtung abgewandten Fläche (22) der Aufnahme gehalten ist.

5. Werkzeugträgerrotor nach Anspruch 2,3 oder 4, **dadurch gekennzeichnet, dass** eine hintere Fläche (2b) des Werkzeugs eine Ausnehmung aufweist und dass diese Ausnehmung durch einen ersten oberen im wesentlichen zur hinteren Fläche des Werkzeuges parallelen Abschnitt und einem zweiten, unteren Abschnitt gebildet ist, der in Richtung der vorderen Fläche um 10° bis 90°geneigt ist.

## Claims

1. A tool carrier rotor (100) having a tool (1) for milling and shredding and the like, wherein the tool (1) is arranged in a tool carrier (20) for the tool carrier rotor (100) which is rotatable about the rotor axis, wherein the tool can be received in a receptacle (21, 22, 23) of the tool carrier (20) arranged on the tool carrier rotor (100), wherein the receptacle is formed by a first surface (21) provided in the cutting direction and a second surface (22) to which the tool is fastened with its surface facing away from the cutting direction, wherein the tool (1) has a body (2) which has a front surface (2a) in the direction of rotation of the rotor and a rear surface (2b) opposite the front surface (2a), **characterized in that** the tool (1) can be clamped and held between the surface (21) in the cutting direction (10) of the receptacle and the surface (22) of the receptacle facing away from the cutting direction (10), while leaving a clearance (13) between the tool and a receptacle bottom of the receptacle.

2. A tool carrier rotor according to claim 1, wherein the tool (1) has a body (2) which has a front surface (2a) in the direction of rotation of the rotor and a rear surface (2b) opposite to the front surface (2a), and that the rear surface (2b) is inclined from 1° to 10° with respect to the front surface (2a).

3. A tool carrier rotor according to claim 2, **characterized in that** the rear surface (2b) of the tool (1) comprises a recess and that said receptacle has a first and a second lower end portion inclined between 10° - 90° with respect to the upper portion in the direction of rotation.

4. Tool carrier rotor according to claim 2 or 3, **characterized in that** the tool is held exclusively between the surface (21) in the cutting direction of the receptacle and the surface (22) of the receptacle facing away from the cutting direction.

5. A tool carrier rotor according to claim 2, 3 or 4, **characterized in that** a rear surface (2b) of the tool has a recess and **in that** said recess is formed by a first upper portion substantially parallel to the rear surface of the tool and a second, lower portion inclined by 10° to 90° in the direction of the front surface.

## Revendications

1. Rotor porte-outil (100) comprenant un outil (1) pour le fraisage et le broyage et analogue, l'outil (1) étant disposé dans un porte-outil (20) pour le rotor porte-outil (100) qui peut tourner autour de l'axe du rotor, l'outil pouvant être reçu dans un logement (21, 22, 23) du porte-outil (20) disposé sur le rotor porte-outil (100), le logement étant formé par une première surface (21) prévue dans la direction de coupe et une seconde surface (22) sur laquelle l'outil est fixé par sa surface opposée à la direction de coupe, l'outil (1) comportant un corps (2) qui présente une surface frontale (2a) dans le sens de rotation du rotor et une surface arrière (2b) opposée à la surface frontale (2a), **caractérisé en ce que** l'outil (1) peut être serré et maintenu entre la surface (21) dans le sens de coupe (10) du logement et la surface (22) du logement opposée à la direction de coupe (10), tout en laissant un jeu (13) entre l'outil et un fond de logement du logement.

2. Rotor porte-outil selon la revendication 1, dans lequel l'outil (1) possède un corps (2) qui présente une surface frontale (2a) dans le sens de rotation du rotor et une surface arrière (2b) opposée à la surface frontale (2a) et en ce que la surface arrière (2b) est inclinée de 1° à 10° par rapport à la surface frontale (2a).

3. Rotor porte-outil selon la revendication 2, **caractérisé en ce que** la surface arrière (2b) de l'outil (1) comporte un évidement et **en ce que** ledit logement présente une première et une seconde partie d'extrémité inférieure inclinées entre 10° et 90° par rapport à la partie supérieure dans le sens de la rotation.

4. Rotor porte-outil selon la revendication 2 ou 3, **caractérisé en ce que** l'outil est maintenu exclusivement entre la surface (21) dans le sens de coupe du logement et la surface (22) du logement opposée au sens de coupe.

5. Rotor porte-outil selon la revendication 2, 3 ou 4, **caractérisé en ce qu'**une surface arrière (2b) de l'outil présente un évidement et **en ce que** cet évidement est formé par une première partie supérieure sensiblement parallèle à la surface arrière de l'outil et une seconde partie inférieure inclinée de 10° à 90° en direction de ladite surface avant.
